# EUROPEAN PATENT APPLICATION

(11) **EP 2 933 086 A1**
(43) Date of publication of application: **21.10.2015**
(21) Application number: 13862516.5
(22) Date of filing: 10.12.2013
(51) Int. Cl.: B29C 47/90, B29K 67/00

(54) **POLYGLYCOLIC ACID SOLIDIFIED EXTRUSION AND METHOD FOR PRODUCING SAME**

(30) Priority: 12.12.2012 JP 2012271598
(71) Applicant: Kureha Corporation, Chuo-ku Tokyo 103-8552 (JP)
(72) Inventor: OKURA Masayuki, Tokyo 103-8552 (JP); SATO Hiroyuki, Tokyo 103-8552 (JP)
(74) Representative: Zimmermann & Partner Patentanwälte mbB
(86) International application number: PCT/JP2013/083049
(87) International publication number: WO 2014/092067

(57) **Abstract**

Provided are: a polyglycolic acid (PGA) solidification- and extrusion-molded article that is formed from a resin material containing PGA, the PGA having a weight average molecular weight of 100,000 to 300,000 and a melt viscosity (temperature: 270°C; shearing speed: 120 sec⁻¹) of 100 to 2,000 Pa·s, and that has a tensile strength at a temperature of 150°C of 20 to 200 MPa; a downhole tool or component thereof for drilling and completion of petroleum recovery formed by machining the solidification- and extrusion-molded article; an isolation plug provided with the component; an isolation plug mandrel; and a method for manufacturing the PGA solidification- and extrusion-molded article and a method for manufacturing the downhole tool or component thereof that comprise the steps of: supplying the resin material to an extruder (preferably from a fixed-quantity feeder); and after solidification- and extrusion-molding, pressurizing the solidification- and extrusion-molded article, and drawing the same while applying back pressure thereto in a direction of a forming die to suppress the expansion of the solidified and extruded matter.

## Description

### TECHNICAL FIELD

The present invention relates to a solidification- and extrusion-molded article of polyglycolic acid and a method for manufacturing the same. More particularly, the present invention relates to a solidification- and extrusion-molded article of polyglycolic acid that is thick or has a large diameter and that can be formed into a secondarily molded product of a desired shape by machining such as cutting, drilling, and shearing, and a method for manufacturing the same.

### BACKGROUND ART

Resin molded articles having a three-dimensional shape or complex shape are molded typically by injection molding. Injection molding can mass-produce molded articles having a desired shape. However, in order to manufacture molded articles that are required to have a high dimensional precision by injection molding, an expensive die having a high dimensional precision is required. Furthermore, since injection-molded articles are readily deformed by shrinkage and/or residual stress after the injection molding, the shape of the die needs to be adjusted precisely depending on the shape of the molded article and properties of the resin material. Since fraction defective is high in injection molding, product cost thereby is often high. Furthermore, injection molding of a molded article having a large thickness is difficult due to shrinkage and/or residual stress.

In order to obtain molded articles having a three-dimensional shape or complex shape, a method for molding secondarily molded article having a desired shape, the method comprising: extruding and solidifying a resin material; producing a stock shape for machining (also referred to as "stock shape for cutting") having a shape, such as a plate, round bar, pipe, special shape, or another shape; and subjecting the stock shape for machining to machining, such as cutting, drilling, and shearing, has been known. The method of machining the stock shape for machining has advantages, including that a molded articles can be produced in small quantities at a relatively low cost because an expensive die is not required, that frequent modifications in molded article specifications can be accommodated, that molded articles with high dimensional precision can be obtained, that molded articles having a complex shape or large thickness, which is not suitable for production using injection molding, can be produced, and the like.

However, not all resin materials and/or extrusion molded articles are suitable as stock shapes for machining. A stock shape for machining needs to satisfy high levels of required properties, such as having a large thickness and excellent machinability, having low residual stress, being capable of avoid excessive heat generation that leads to deformation and/or discoloration due to heat of friction generated during machining, being capable of being machined with high precision, and the like.

In general, most of processing methods used in metallic materials are utilized in machining of polymeric stock shapes as it is. Even among extrusion molded products, an extrusion molded product that is thin and has great flexibility, such as a typical film, sheet, or tube, is unsuitable for machining such as cutting. Even among extrusion molded products having shapes, such as plate or round bar, with a large thickness or large diameter, if the extrusion molded product has excessively large residual stress during extrusion molding, the extrusion molded product readily deforms during or after machining, and it is difficult to obtain a secondarily molded article having high dimensional precision. Even among extrusion molded products having reduced residual stress, the extrusion molded product that readily breaks or cracks during machining, such as cutting, drilling, and shearing, is not suitable as stock shape for machining.

In order to obtain, via extrusion molding, a stock shape for machining having properties suitable for machining, selection of resin materials, method of extrusion molding, or the like needs to be devised. Therefore, various extrusion molding methods for producing extrusion molded articles suitable as stock shapes for machining, the method using resin materials that contain general-purpose resins and/or engineering plastics, have been proposed so far.

For example, Japanese Unexamined Patent Application Publication No. 2005-226031 (Patent Document 1) discloses a method for producing a stock shape for machining having a thickness or diameter exceeding 3 mm, the method comprising solidification- and extrusion-molding a resin composition containing an engineering plastic such as a polyether ether ketone, polyetherimide, polyphenylene sulfide, polysulfone, polyether sulfone, or polycarbonate.

On the other hand, biodegradable plastics have drawn attention as polymer materials that have little adverse effect on environment, and have been used in applications including extrusion molded articles such as films and sheets, blow molded articles such as bottles, injection molded articles, and the like. Recently, application of biodegradable plastics in stock shapes for machining has been increasingly demanded.

Polyglycolic acid is a crystalline resin having superior tensile strength, tensile elongation, bending strength, elastic modulus in bending, hardness, flexibility, heat resistance, and the like compared to other biodegradable plastics such as polylactic acid, and the polyglycolic acid is also a biodegradable plastic having the greater or equal gas barrier properties to general-purpose gas barrier resins. Polyglycolic acid can be molded into films and/or sheets via extrusion molding. For example, Japanese Unexamined Patent Application Publication No. H10-060137 (Patent Document 2) discloses a method for molding polyglycolic acid into a sheet via extrusion molding. In the disclosure, various sheet molded articles are produced using the sheet, having a thickness of 0.01 to 5 mm, utilizing its toughness, heat resistance, transparency, and other characteristics.

Furthermore, Japanese Unexamined Patent Application Publication No. 2010-069718 (Patent Document 3) discloses a solidification- and extrusion-molded article of polyglycolic acid, having a thickness or diameter of 5 to 100 mm, that is produced by subjecting polyglycolic acid to solidification- and extrusion-molding. Specifically, a solidification- and extrusion-molded article of polyglycolic acid having a density of 1.575 to 1.625 g/cm³ and a thickness or diameter of 5 mm or greater but 100 mm or less, the solidification- and extrusion-molded article of polyglycolic acid being formed of a resin material containing polyglycolic acid having a melt viscosity of 10 to 1,500 Pa·s, particularly preferably 70 to 900 Pa·s, measured at a temperature of 270°C under a shearing speed of 120 sec⁻¹, has been disclosed.

As the concern over resource constraints increases, retrieval of carbohydrate resources (in the present invention, also simply referred to as "petroleum") from the ground containing hydrocarbon resources such as petroleum (e.g. shale oil) and gas (e.g. shale gas) has been performed at even deeper levels. Because of this, physical properties required for a downhole tool or component thereof (i.e. downhole tool component) that is used to form or maintain the downhole (underground bore hole) provided for the retrieval or to promote the retrieval of the resources have been more strict. For example, in horizontal boreholes formed laying almost horizontally in a shale reservoir or the like located below 1,000 m underground, a method of performing hydraulic fracturing (fracturing) has been widely used. As locations of downholes have become deeper and deeper, ball sealers, which are downhole tool components for blocking a bore hole (fracture) formed by hydraulic fracturing, and isolation plugs, such as frac plugs, bridge plugs, and packers, which are downhole tools provided in a downhole to perform hydraulic fracturing are used to block places that are in the vicinity of the tip of a downhole or to block places that had been subjected to hydraulic fracturing before. Thereafter, hydraulic fracturing is newly performed or performed again, and, after the formation of a bore hole (fracture), the ball sealers and isolation plugs are collected or broken, and then used to extend well drilling and completion and/or to perform another hydraulic fracturing at another location. Therefore, downhole tools such as isolation plugs and/or downhole tool components provided therein are required to exhibit ease and/or satisfactory cost upon retrieval or breaking as well as strength (e.g. tensile strength) that tolerates hydraulic fracturing and/or construction.

Typically, isolation plugs, such as frac plugs, bridge plugs, packers, and cement retainers, have structures in which a component for blocking formed from rubber is attached around a plug mandrel, and the blocking mechanism of the isolation plug achieves blocking effect by changing the shape of the rubber by tension and/or compression of mandrel (US Patent Application Publication No. 2005/205266 specification (Patent Document 4)). Maximum size of the plug mandrel is the inner diameter of the downhole, and the plug mandrel can have any predetermined outer diameter as long as a component for blocking formed from rubber can be attached around the plug mandrel. In many cases, the size of the plug mandrel is from 80 to 100 mm. Furthermore, the plug mandrel typically has a hollow shape in order to pass mud therethrough. The hollow diameter is, in many cases, from 10 to 50 mm, typically 19.1 mm (0.75 in.), 25.4 mm (1 in.), 31.8 mm (1.25 in.), and the plug mandrel has a shape comprising, for example, a main part having a pipe-like shape of approximately 1,000 mm in length, and a diameter expanded part at both ends so that a jig for performing tension and/or compression of the mandrel can be engaged. During the tension and/or compression of the plug mandrel, high load of approximately 2,000 to 5,000 kgf (approximately 19,600 to 49,000 N), and in many cases, approximately 2,500 to 4,500 kgf (approximately 24,500 to 44,100 N) is applied to the mandrel. Since two to five times of the stress concentration is applied especially to the above-described diameter expanded part (connecting part with a jig) of the mandrel, a material having a strength that can tolerate such a high load should be selected.

On the other hand, after performing hydraulic fracturing, a method of retrieving the blocking component and/or breaking mandrel to form an opening is employed. Since, conventionally, metals such as cast iron have been used as the plug mandrels, retrieval of isolation plugs involved high cost, and also, breaking of the metal mandrels also involved difficulty and high cost. Because of this, epoxy resin composite materials and the like have been also used as the plug mandrels. However, even in resin composite materials such as epoxy resin composite materials, problems such as insufficient strength and high cost required to retrieve the blocking material remain the same. In addition, there is a problem that, since reinforced materials (e.g. carbon fibers and metal fibers) and resins after breaking the mandrels are non-degradable, it is practically impossible to treat and/or dispose the resin composite materials. In particular, geothermal gradient (rate of increasing temperature in the ground) in the ground (earth's crust) is estimated to be approximately 3 K/100 m. Since recent downholes which reach 3,000 m underground involve a high temperature environment, exceeding approximately 100°C, blocking materials having sufficient strength, such as tensile strength, in such a high temperature environment have been demanded.

Use of degradable plastics in downhole tools or components thereof is expected since degradable plastics can be disintegrated by leaving them in the downhole without collecting them on the ground after use. Specifically, a degradable plastic that can be processed into a desired shape by machining and that has sufficient strength in a high temperature environment exceeding 100°C; a downhole tool or component thereof formed from such a degradable plastic; and a method for manufacturing these have been demanded.

### CITATION LISTS

### Patent Documents

Patent Document 1: Japanese Unexamined Patent Application Publication No. 2005-226031A (corresponding to US Patent Application Publication No. 2008/038517 specification)
Patent Document 2: Japanese Unexamined Patent Application Publication No. H10-060137A
Patent Document 3: Japanese Unexamined Patent Application Publication No. 2010-069718A
Patent Document 4: US Patent Application Publication No. 2005/205266 A1 specification

### SUMMARY OF INVENTION

### Technical Problem

An object of the present invention is to provide a secondarily molded product having a desired shape by machining, such as cutting, drilling, and shearing, and in particular, to provide a solidification- and extrusion-molded article of degradable resin that can be formed into a downhole tool or component thereof which is provided in an isolation plug, and that has sufficient strength in a high temperature environment; and to provide a method for manufacturing the same.

### Solution to Problem

As a result of diligent research to solve the above problems, the present inventors have found that a solidification- and extrusion-molded article of degradable resin, specifically a solidification- and extrusion-molded article of polyglycolic acid, that can be formed into a downhole tool or component thereof, such as an isolation plug, capable of being used in a high temperature environment can be obtained by optimizing the molecular weight and melt viscosity of polyglycolic acid, tensile strength at a specific temperature, conditions for solidification- and extrusion-molding, and the like, and, in particular, by controlling the expansion of the solidified and extruded matter in a thickness direction or radial direction via pressurizing the solidified and extruded matter, and thus completed the present invention.

That is, according to the present invention, a solidification- and extrusion-molded article of polyglycolic acid having a tensile strength at a temperature of 150°C of 20 to 200 MPa; the solidification- and extrusion-molded article being formed from a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s is provided.

As embodiments according to the present invention, solidification- and extrusion-molded articles of polyglycolic acid described below (1) to (4) are provided.
(1) The solidification- and extrusion-molded article of polyglycolic acid described above, wherein the solidification- and extrusion-molded article has a round bar, hollow, or plate shape.
(2) The solidification- and extrusion-molded article of polyglycolic acid described above, wherein the resin material is a polyglycolic acid composition containing from 0.001 to 5 mass% of colorant in terms of a total mass.
(3) The solidification- and extrusion-molded article of polyglycolic acid described above, wherein the resin material is a polyglycolic acid composition containing from 5 to 70 mass% of filler in terms of a total mass.
(4) The solidification- and extrusion-molded article of polyglycolic acid described above, wherein the solidification- and extrusion-molded article is a stock shape for machining.

Furthermore, a downhole tool or component thereof for drilling and completion of petroleum recovery formed by machining the solidification- and extrusion-molded article of polyglycolic acid described above is provided according to the present invention. Moreover, an isolation plug comprising the downhole tool component for drilling and completion of petroleum recovery, or the downhole tool component for drilling and completion of petroleum recovery described above serving as an isolation plug mandrel is provided.

Furthermore, according to the present invention, a method for manufacturing a solidification- and extrusion-molded article of polyglycolic acid having a tensile strength at a temperature of 150°C of 20 to 200 MPa is provided, the method comprising steps 1 to 4 below:
a) step 1 of supplying a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s, into an extruder, and melt-kneading the resin material at a cylinder temperature of the extruder of 220 to 285°C;
b) step 2 of extruding the resin material, melted by melt-kneading, from an extrusion die at a tip of the extruder into a flow path of a forming die comprising cooling means and the flow path that communicates with a path of melted resin of the extrusion die and that has a cross-sectional shape of an extrusion molded article;
c) step 3 of solidifying the melted and extruded matter formed from the resin material by cooling in the flow path of the forming die, and then extruding the solidified and extruded matter from the tip of the forming die to outside; and
d) step 4 of pressurizing the solidified and extruded matter, and drawing the same while applying back pressure thereto in a direction of the forming die to suppress expansion of the solidified and extruded matter in a thickness direction or radial direction to obtain a solidification- and extrusion-molded article of polyglycolic acid.

As embodiments according to the present invention, methods for manufacturing a solidification- and extrusion-molded article of polyglycolic acid described below (i) to (vi) are provided.
(i) The manufacturing method described above, wherein, in the step 1, the resin material containing polyglycolic acid is supplied to the extruder using a fixed-quantity feeder.
(ii) The manufacturing method described above, wherein, in the step 3, a forming die having heating means in addition to the cooling means is used; and the step 3 comprises: first, heating the melted and extruded matter in the flow path around an extrusion die outlet to a temperature of 230 to 290°C by the heating means, and then cooling the melted and extruded matter in the flow path to a temperature lower than a crystallization temperature of the polyglycolic acid to solidify the melted and extruded matter by the cooling means.
(iii) The manufacturing method described above, further comprising step 5, in which the solidification- and extrusion-molded article of polyglycolic acid obtained in the step 4 is heat-treated at a temperature of 150 to 230°C for 3 to 24 hours.
(iv) The manufacturing method described above, wherein the resin material is a polyglycolic acid composition containing from 0.001 to 5 mass% of colorant in terms of a total mass.
(v) The manufacturing method described above, wherein the resin material is a polyglycolic acid composition containing from 5 to 70 mass% of filler in terms of a total mass.
(vi) The manufacturing method described above, wherein a solidification- and extrusion-molded article of polyglycolic acid in a round bar, hollow, or plate shape having a tensile strength at a temperature of 150°C of 20 to 200 MPa is obtained.

Furthermore, according to the present invention, a method for manufacturing a downhole tool or component thereof for drilling and completion of petroleum recovery is provided, the method further comprising step 6 of machining the solidification- and extrusion-molded article of polyglycolic acid, the solidification- and extrusion-molded article being manufactured by the manufacturing method described above and having a tensile strength at a temperature of 150°C of 20 to 200 MPa.

### EFFECT OF THE INVENTION

According to the present invention, a solidification- and extrusion-molded article of polyglycolic acid having a tensile strength at a temperature of 150°C of 20 to 200 MPa; the solidification- and extrusion-molded article being formed from a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s is provided. Therefore, by subjecting the solidification- and extrusion-molded article of polyglycolic acid to machining such as cutting, drilling, and shearing, a secondarily molded product having a desired shape, particularly a solidification- and extrusion-molded article of degradable resin that has sufficient strength in a high temperature environment and that can be formed into a downhole tool component or the like provided in an isolation plug, an isolation plug comprising the downhole tool component, and an isolation plug mandrel can be provided. Furthermore, according to the manufacturing method of the present invention, it is possible to provide a secondarily molded product, particularly a solidification- and extrusion-molded article of degradable resin having sufficient strength in a high temperature environment and properties suitable for machining to form a downhole tool or component thereof for drilling and completion of petroleum recovery, that has reduced residual stress and excellent hardness, strength, and flexibility.

### DETAILED DESCRIPTION

### 1. Solidification- and extrusion-molded article of polyglycolic acid

The solidification- and extrusion-molded article of polyglycolic acid of the present invention is a solidification- and extrusion-molded article of polyglycolic acid having a tensile strength at a temperature of 150°C of 20 to 200 MPa; the solidification- and extrusion-molded article being formed from a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s.

The polyglycolic acid used in the present invention is a polymer containing a repeating unit represented by formula 1: -(-O-CH₂-CO-)-. The proportion of the repeating unit represented by formula 1 in the polymer is typically 50 mass% or greater, preferably 70 mass% or greater, more preferably 80 mass% or greater, even more preferably 90 mass% or greater, particularly preferably 95 mass% or greater, and most preferably 99 mass% or greater. If the proportion of the repeating unit represented by formula 1 is less than 50 mass%, toughness, crystallizability, heat resistance, hardness, gas barrier properties, and the like tend to be decreased. In many cases, use of homopolymer of polyglycolic acid, where the proportion of the repeating unit represented by formula 1 is 100 mass%, is the most preferable.

The polyglycolic acid can be produced by condensation polymerization of glycolic acid or ring-opening polymerization of glycolide. Preferable repeating units other than the repeating unit represented by formula 1 include, for example, repeating units derived from cyclic monomers such as ethylene oxalate, lactide, lactones, trimethylene carbonate, and 1,3-dioxane; however, the repeating unit is not limited to these.

By introducing the cyclic monomer-derived repeating unit at a proportion of 1 mass% or greater, processing temperature can be lowered by the lowering of the melting point of the polyglycolic acid, and thus thermal decomposition during melt processing can be reduced. Extrusion moldability can be also enhanced by controlling the rate of crystallization of the polyglycolic acid by means of copolymerization. On the other hand, if the amount of the cyclic monomer-derived repeating unit is too large, intrinsic crystallizability of polyglycolic acid will be lost, and the toughness, heat resistance, and the like of the obtained solidification- and extrusion-molded article may be significantly lowered.

The polyglycolic acid used in the present invention is preferably a high-molecular weight polymer. That is, the weight average molecular weight of the polyglycolic acid used in the present invention is from 100,000 to 300,000, preferably from 110,000 to 290,000, more preferably from 120,000 to 280,000, even more preferably from 140,000 to 270,000, and particularly preferably from 150,000 to 260,000. Furthermore, the melt viscosity of the polyglycolic acid used in the present invention measured at a temperature of 270°C under a shearing speed of 120 sec⁻¹ is from 100 to 2,000 Pa·s, preferably from 250 to 1,600 Pa·s, more preferably from 500 to 1,400 Pa·s, even more preferably from 750 to 1,300 Pa·s, and particularly preferably from 910 to 1,200 Pa·s.

The weight average molecular weight of polyglycolic acid is measured by a method described below. In hexafluoroisopropanol (HFIP) in which sodium trifluoroacetate is dissolved at a concentration of 5 mM, 10 mg of sample is dissolved to make a 10 mL solution, and then the solution is filtered using a membrane filter to obtain a sample solution. By injecting 10 µL of the sample solution into a gel permeation chromatography (GPC) instrument, molecular weight of the sample solution is measured under the following conditions. Note that the sample solution is injected into the GPC instrument within 30 minutes after the sample is dissolved.

### <GPC measurement conditions>

Instrument: LC-9A, manufactured by Shimadzu Corporation
Column: two HFIP-806M (connected in series), manufactured by Showa Denko K.K.
Pre-column: one HFIP-LG
Column Temperature: 40°C
Eluent: HFIP solution in which sodium trifluoroacetate is dissolved at a concentration of 5 mM
Flow rate: 1 mL/min
Detector: differential refractometer
Molecular weight calibration: data of a molecular weight calibration curve produced by using five types of polymethylmethacrylates having standard molecular weights that are different from each other (manufactured by Polymer Laboratories Ltd.) is used

The melt viscosity of the polyglycolic acid measured at a temperature of 270°C under a shearing speed of 120 sec⁻¹ is measured by a method described below. A sample is prepared by crystallizing an amorphous sheet of polyglycolic acid having a thickness of approximately 0.2 mm by heating the amorphous sheet at approximately 150°C for 5 minutes. The melt viscosity of the sample was measured by using this sample and a capilograph equipped with a nozzle having a diameter (D) of 0.5 mm and length (L) of 5 mm (manufactured by Toyo Seiki Seisaku-sho, Ltd.) at a temperature of 270°C under a shearing speed of 120 sec⁻¹.

If either the weight average molecular weight or melt viscosity, or the both of the polyglycolic acid are too low, melt extrusion and/or solidification- and extrusion-molding will be difficult, the flexibility and toughness of the obtained solidification- and extrusion-molded article will be reduced, and the solidification- and extrusion-molded article will be easily cracked during machining. If either the weight average molecular weight or melt viscosity, or the both of the polyglycolic acid are too low, the solidification- and extrusion-molded article may be also cracked during heat treatment (annealing). If either the weight average molecular weight or melt viscosity, or the both of the polyglycolic acid are too high, thermal degradation of the polyglycolic acid will easily occur since the polyglycolic acid has to be heated to a high temperature during melt extrusion.

The resin material used in the present invention is a resin composition containing polyglycolic acid as a main component. The word "main component" represents that the contained proportion of the polyglycolic acid in the resin component is typically 50 mass% or greater, preferably 70 mass% or greater, more preferably 80 mass% or greater, and even more preferably 90 mass% or greater. Examples of other resin component include thermoplastic resins other than polyglycolic acid, such as polylactic acid and other biodegradable resins. Obviously, a resin composition in which the contained proportion of the polyglycolic acid in the resin component is 100 mass% can be used.

The resin material used in the present invention may contain a colorant such as a dye or pigment. By using a colorant, a solidification- and extrusion-molded article of polyglycolic acid that is high quality and that can be readily subjected to machining, such as cutting, can be obtained. As the colorant, a pigment is preferable from the perspective of having excellent heat resistance. As the pigment, pigments of various color tones, such as yellow pigments, red pigments, white pigments, and black pigments, that are used in the technical field of synthetic resin can be used. Among these pigments, carbon black is particularly preferable. Examples of the carbon black include acetylene black, oil furnace black, thermal black, channel black, and the like.

The resin material used in the present invention is preferably a polyglycolic acid composition containing from 0.001 to 5 mass% of colorant in terms of the total mass. The contained proportion of the colorant is preferably from 0.01 to 3 mass%, and more preferably from 0.05 to 2 mass%. Although the colorant can be melt-kneaded with the polyglycolic acid, optionally, it is also possible to prepare a resin material having a desired colorant concentration by producing a polyglycolic acid composition having a high colorant concentration (masterbatch) and then diluting the masterbatch with polyglycolic acid. From the perspective of uniform dispersibility of the colorant, it is preferable to prepare a resin material that is formed into a pellet by melt-kneading the polyglycolic acid and the colorant.

The resin material used in the present invention can contain filler in order to enhance mechanical strength and heat resistance. As the filler, fibrous fillers and granular or powdered fillers can be used; however, fibrous fillers are preferable.

Examples of fibrous filler include inorganic fibrous substances such as glass fibers, carbon fibers, asbestos fibers, silica fibers, alumina fibers, zirconia fibers, boron nitride fibers, silicon nitride fibers, boron fibers, and potassium titanate fibers; metal fibrous substances such as stainless steel, aluminum, titanium, steel, and brass; and organic fibrous substances with a high melting point such as aramid fibers, kenaf fibers, polyamides, fluorine resins, polyester resins, and acrylic resins; and the like. Short fibers having a length of 10 mm or less, more preferably 1 to 6 mm, and even more preferably 1.5 to 4 mm are preferable as the fibrous fillers. Furthermore, inorganic fibrous substances are preferably used, and glass fibers are particularly preferable.

As the granular or powdered filler, mica, silica, talc, alumina, kaolin, calcium sulfate, calcium carbonate, titanium oxide, ferrite, clay, glass powder (e.g. milled glass fiber), zinc oxide, nickel carbonate, iron oxide, quartz powder, magnesium carbonate, barium sulfate, and the like can be used.

These fillers can be used alone, or two or more types thereof can be combined for use. The filler may be treated with a sizing agent or surface treatment agent as necessary. Examples of the sizing agent or surface treatment agent include functional compounds such as epoxy-based compounds, isocyanate-based compounds, silane-based compounds, and titanate-based compounds. These compounds may be used to perform surface treatment or sizing treatment on the filler in advance or may be added at the same time as the preparation of the resin composition.

For cases where the resin material contains the filler, the contained proportion of the filler is from 5 to 70 mass%, preferably from 10 to 60 mass%, more preferably from 15 to 50 mass%, and even more preferably from 20 to 40 mass%, in terms of the total mass. Although the filler can be melt-kneaded with the polyglycolic acid, optionally, it is also possible to prepare a resin material having a desired filler concentration by producing a polyglycolic acid composition having a high filler concentration (masterbatch) and then diluting the masterbatch with polyglycolic acid. From the perspective of uniform dispersibility of the filler, it is preferable to prepare a resin material that is formed into a pellet by melt-kneading the polyglycolic acid and the filler.

In the resin material used in the present invention, as other additives other than those described above, for example, impact modifiers, resin-modifying agents, corrosion inhibitors for die such as zinc carbonate and nickel carbonate, lubricants, thermosetting resins, antioxidants, ultraviolet absorbents, nucleating agents such as boron nitride, flame retardants, and the like can be suitably added.

### Tensile strength at a temperature of 150°C

The tensile strength at a temperature of 150°C (hereinafter, also referred to as "tensile strength at 150°C") of the solidification- and extrusion-molded article of polyglycolic acid of the present invention is from 20 to 200 MPa. The tensile strength at 150°C is preferably from 21 to 180 MPa, more preferably from 22 to 160 MPa, even more preferably from 23 to 150 MPa, and particularly preferably from 24 to 140 MPa.

The tensile strength at 150°C of the solidification- and extrusion-molded article of polyglycolic acid is measured in accordance with JIS K7113; however, the tensile strength is measured while a sample piece is left in an oven to make the test temperature to be at 150°C (unit: MPa).

By setting the tensile strength at 150°C of the solidification- and extrusion-molded article of polyglycolic acid of the present invention to be from 20 to 200 MPa, a solidification- and extrusion-molded article of degradable resin having sufficient strength even in a high temperature environment at a temperature exceeding 100°C, such as an environment in the ground deeper than 3,000 m underground, can be provided.

Therefore, the solidification- and extrusion-molded article of polyglycolic acid of the present invention can be suitably used to form a downhole tool component for drilling and completion of petroleum recovery or the like that is provided in an isolation plug, such as a mandrel of an isolation plug, including a frac plug, bridge plug, packer, cement retainer, or the like. During the tension and/or compression of the isolation plug mandrel, high load of approximately 2,000 to 5,000 kgf (approximately 19,600 to 49,000 N), and in many cases, approximately 2,500 to 4,500 kgf (approximately 24,500 to 44,100 N) is applied to the mandrel. Since two to five times of the stress concentration is applied especially to the above-described diameter expanded part of the mandrel (connecting part with a jig), a strength that can tolerate a load of approximately 4,000 to 25,000 kgf (approximately 39,200 to 245,000 N), and in many cases, approximately 6,000 to 20,000 kgf (approximately 58,800 to 196,000 N) in a high temperature environment at a temperature exceeding 100°C is required.

Since the isolation plug mandrel often has a hollow shape as described above, the mandrel supports the above-described high load by its cross-sectional area of a hollow cross section. If the tensile strength at 150°C of the solidification- and extrusion-molded article of polyglycolic acid of the present invention is 20 MPa or greater, this tensile strength indicates that the isolation plug mandrel can tolerate a load of approximately 5,000 kgf (approximately 49,000 N) in an environment at a temperature of 150°C when the cross-sectional area of the hollow cross section of the isolation plug mandrel is approximately 2,450 mm² (practically, for an isolation plug mandrel having a cross-sectional area of the hollow cross section of approximately 2,800 mm², its strength is considered to be sufficient if no break is caused in a tensile test in which a load of approximately 3,500 kgf (approximately 34,300 N) is applied at a temperature of 150°C). Therefore, the solidification- and extrusion-molded article of polyglycolic acid having a tensile strength at 150°C of 20 to 200 MPa of the present invention can sufficiently tolerate the stress applied to the isolation plug mandrel having a typical size (cross-sectional area) in the ground as deep as below 3,000 m underground (temperature: approximately 100°C). Note that, in many cases, solidification- and extrusion-molded articles of polyglycolic acid having a tensile strength at 150°C of greater than 200 MPa are difficult to be produced or machined.

Although the shape and size of the solidification- and extrusion-molded article of polyglycolic acid of the present invention are not particularly limited, for example, a solidification- and extrusion-molded article having a thickness or diameter of 5 to 500 mm, preferably from 20 to 300 mm, and more preferably from 30 to 200 mm, can be obtained. Furthermore, solidification- and extrusion-molded articles having various shapes such as round bar, plate, hollow such as pipe, or special shapes can be obtained. However, from the perspective of easy solidification- and extrusion-molding and subsequently performed densification processing, and from the perspective of having many qualities suitable as a solidification- and extrusion-molded article (i.e. a stock shape for machining), the solidification- and extrusion-molded article preferably has a round bar, hollow, or plate shape. A round bar shape is more preferable for forming a downhole tool for drilling and completion of petroleum recovery or a downhole tool component for drilling and completion of petroleum recovery, particularly an isolation plug mandrel, described below.

The density ("density" refers to the density of resin part excluding the filler part) of the solidification- and extrusion-molded article of polyglycolic acid of the present invention is not particularly limited as long as the solidification- and extrusion-molded article of polyglycolic acid is a solidification- and extrusion-molded article of polyglycolic acid that is formed from a resin material containing the polyglycolic acid and has a tensile strength at a temperature of 150°C of 20 to 200 MPa. However, the density is preferably from 1,570 to 1,610 kg/m³, more preferably from 1,575 to 1,605 kg/m³, even more preferably from 1,577 to 1,603 kg/m³, and particularly preferably from 1,580 to 1,600 kg/m³. If the density of the solidification- and extrusion-molded article of polyglycolic acid is too low, cracking will readily occur during machining such as cutting, drilling, and shearing, due to a decrease in strength, hardness, toughness, flexibility, and the like. If the density of the solidification- and extrusion-molded article of polyglycolic acid is too high, production will be difficult.

The solidification- and extrusion-molded article of polyglycolic acid of the present invention may be a solidification- and extrusion-molded article such that the densities of a surface part and a center part (in the case of hollow shape, an inner circumferential part) of the molded article are different from each other. The difference between the density of the surface part and the density of the center part is preferably in a range of 0.5 to 50 kg/m³, more preferably 1.5 to 20 kg/m³, even more preferably 2.0 to 10 kg/m³, and particularly preferably 2.5 to 5 kg/m³. If the difference between the density of the surface part and the density of the center part of the solidification- and extrusion-molded article of polyglycolic acid is in the range described above, a stock shape for machining having excellent machinability can be obtained, and it will be possible to precisely control the shape of a secondarily molded product that is formed by machining, such as cutting. Therefore, the above-described range is preferable.

### 2. Manufacturing method for solidification- and extrusion-molded article of polyglycolic acid

The solidification- and extrusion-molded article of polyglycolic acid of the present invention can be manufactured by the manufacturing method comprising the steps 1 to 4 described in the following a) to d).

A method for manufacturing a solidification- and extrusion-molded article of polyglycolic acid having a tensile strength at a temperature of 150°C of 20 to 200 MPa, the method comprising:
a) step 1 of supplying a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s, into an extruder, and melt-kneading the resin material at a cylinder temperature of the extruder of 220 to 285°C;
b) step 2 of extruding the resin material, melted by melt-kneading, from an extrusion die at a tip of the extruder into a flow path of a forming die comprising cooling means and the flow path that communicates with a path of melted resin of the extrusion die and that has a cross-sectional shape of an extrusion molded article;
c) step 3 of solidifying the melted and extruded matter formed from the resin material by cooling in the flow path of the forming die, and then extruding the solidified and extruded matter from the tip of the forming die to outside; and
d) step 4 of pressurizing the solidified and extruded matter, and drawing the same while applying back pressure thereto in a direction of the forming die to suppress expansion of the solidified and extruded matter in a thickness direction or radial direction to obtain a solidification- and extrusion-molded article of polyglycolic acid.

According to the present invention, a solidification- and extrusion-molded article of polyglycolic acid having a tensile strength at a temperature of 150°C of 20 to 200 MPa can be obtained by combining and adjusting the weight average molecular weight and melt viscosity of polyglycolic acid, supplying method of material to an extruder, melt-knead conditions, extruding conditions, cooling conditions, back pressure conditions and/or pressurizing conditions applied to the solidified and extruded matter, and heat treatment conditions described below, and the like. Hereinafter, manufacturing steps for cases where a solidification- and extrusion-molded article of polyglycolic acid of the present invention has round bar or plate shape will be described. Solidification- and extrusion-molded articles of polyglycolic acid having other shapes can be produced in the same manner.

First, in the step 1, although the resin material containing polyglycolic acid may be supplied to a hopper attached to a supplying part of the extruder, the resin material containing polyglycolic acid is preferably supplied to the extruder using a fixed-quantity feeder. That is, a fixed-quantity feeder is provided, and then a resin material is placed into a hopper thereof to supply the resin material from the fixed-quantity feeder into a supplying part (hopper) of an extruder at a constant rate. As the resin material, a pellet is preferably used. The resin material is preferably sufficiently dried and dehumidified prior to molding. Conditions for dehumidification and drying is not particularly limited; however, for example, a method of leaving the pellet in a dry atmosphere at 100 to 160°C for 1 to 24 hours is preferably employed.

Subsequently, in the step 1, the resin material is melt-kneaded in the cylinder of the extruder. The cylinder temperature is adjusted to 220 to 285°C, preferably 225 to 275°C, and more preferably 227 to 273°C. For cases where a plurality of heating means is arranged, corresponding to a solid phase resin transportation part, a melting part, a liquid phase resin transportation part, and the like, in the cylinder of the extruder, temperature of each heating means may be made different from each other within the range described above, or the temperature of each heating means may be controlled to be identical.

In the step 2, the resin material melted by melt-kneading is melt-extruded from an extrusion die at a tip of the extruder. The melted resin material from an extrusion die is extruded into a flow path of a forming die comprising cooling means and the flow path that communicates with a path of melted resin of the extrusion die and that has a cross-sectional shape of an extrusion molded article. The cross-sectional shape of the extrusion molded article is rectangular when the extrusion molded article has a plate shape; and the cross-sectional shape of the extrusion molded article is circular when the extrusion molded article has a round bar shape.

In the step 3, the melted and extruded matter formed from the resin material is solidified by cooling in the flow path of the forming die, and then solidified and extruded matter is extruded from the tip of the forming die to outside. The extrusion rate is typically from 5 to 50 mm/10 minutes, and preferably from 10 to 40 mm/10 minutes.

In the step 3, it is preferable to employ a method in which a forming die having heating means in addition to the cooling means is used; and the method comprises, first, heating the melted and extruded matter in the flow path around an extrusion die outlet to a temperature of 230 to 290°C, and preferably 240 to 285°C, by the heating means, and then cooling the melted and extruded matter, particularly the surface part thereof, in the flow path to a temperature lower than a crystallization temperature of the polyglycolic acid to solidify the melted and extruded matter by the cooling means. When the temperature around the extrusion die outlet is lowered rapidly, progress of crystallization of the polyglycolic acid may be delayed. By cooling the temperature in the vicinity of the extrusion die to a temperature within the range described above after heating, it is possible to promote crystallization of the melted and extruded matter, particularly the surface part thereof. Also, by setting the extrusion die outlet temperature to be within the range described above, the temperature of the melted and extruded matter, particularly the surface part thereof, that is in the flow path around the extrusion die outlet can be adjusted to a temperature within the range described above.

By cooling means, the extrusion molded article, particularly the temperature of the surface part thereof, is cooled to a temperature lower than the crystallization temperature of the polyglycolic acid to solidify. The crystallization temperature (crystallization temperature detected when the temperature of the polyglycolic acid in the melted state is lowered) of the polyglycolic acid is typically approximately from 130 to 140°C. The cooling temperature of the cooling means is preferably 100°C or lower, and more preferably 95°C or lower. The lower limit of the cooling temperature is preferably at 40°C, and more preferably at 50°C. For cases where the resin material used in the step 1 contains a filler such as glass fibers, the crystallization temperature of the polyglycolic acid may be raised due to melt-kneading in the cylinder of the extruder; however, even in this case, the cooling temperature is preferably within the range described above.

The heating means comprise, for example, a heater as a heat source. The cooling means comprise, for example, a cooling water pipe that can circulate cooling water as a coolant.

In the step 4, the solidified and extruded matter is pressurized and drawn while back pressure is applied in a direction of the forming die to suppress expansion of the solidified and extruded matter in a thickness direction or radial direction to obtain a solidification- and extrusion-molded article of polyglycolic acid. The pressurizing means include, for example, a combination of upper rolls and lower rolls. The solidified and extruded matter can be pressurized by a method of placing the lower rolls on a stand and then applying a load on the upper rolls. The solidified and extruded matter may be also pressurized by a method of applying a load on the lower rolls in a direction toward upper part and applying a load on the upper rolls in a direction toward lower part.

By applying the pressure, starting from the discharge port of the forming die, on the solidified and extruded matter extruded from the forming die by using rolls in which a plurality of rolls are combined, expansion of the solidified and extruded matter in the thickness direction or radial direction can be suppressed, and back pressure can be also applied in the forming die direction. Also, back pressure can be applied to the solidification- and extrusion-molded article in the forming die direction by combining suitable loading means. Degree of the back pressure is typically in a range of 1,500 to 8,500 kg, preferably 1,600 to 8,000 kg, more preferably 1,800 to 7,000 kg, and even more preferably 2,000 to 6,000 kg. For cases where the diameter or thickness of the solidification- and extrusion-molded article is large, it is preferable to increase the back pressure to be applied. This back pressure can be measured as an external pressure of the die (pressure applied on the flow path).

By suppressing the expansion of the solidified and extruded matter in the thickness direction or radial direction utilizing this pressurization, a solidification- and extrusion-molded article of polyglycolic acid having a tensile strength at a temperature of 150°C of 20 to 200 MPa can be manufactured as the finally resulting solidification- and extrusion-molded article. After the pressurization, the solidification- and extrusion-molded article is drawn.

For cases where the solidification- and extrusion-molded article is a round bar, other than the method of pressurizing using a combination of upper rolls and lower rolls described above, a method of arranging rolls to enclose the round bar-shaped solidification- and extrusion-molded article and then applying pressure on the rolls toward the center can be also used. Any method can be employed as the method of pressurizing the solidified and extruded matter discharged from the forming die as long as the method can apply back pressure in the forming die direction, can suppress expansion of the solidified and extruded matter in a thickness direction or radial direction by pressurization, and can adjust, for example, the thickness or diameter of the eventually resulting solidification- and extrusion-molded article to be in a range of 5 to 500 mm, preferably 20 to 300 mm, and more preferably 30 to 200 mm.

The extrusion molded article of polyglycolic acid obtained in the step 4 is preferably annealed by performing step 5 in which the extrusion molded article is heat-treated at a temperature of 150 to 230°C for 3 to 24 hours. By this annealing treatment, it is possible to remove residual stress of the solidification- and extrusion-molded article and to avoid inconvenience, such as deformation caused in the solidification- and extrusion-molded article itself and deformation caused in the secondarily molded article after machining. The heat treatment temperature is preferably from 175 to 225°C, and more preferably from 185 to 220°C. The heat treatment time is preferably from 4 to 20 hours, and more preferably from 5 to 15 hours.

Although solidification- and extrusion-molded articles of polyglycolic acid manufactured by the manufacturing method of the present invention can have various shapes such as round bar, hollow such as pipe, plate, or special shapes, from the perspective of easy solidification- and extrusion-molding and subsequently performed densification processing, and from the perspective of having many qualities suitable as a stock shape for machining, as well as from the perspective of easy processing into a blocking component mandrel, which is a preferable application, and the like perspectives, the solidification- and extrusion-molded article preferably has a round bar, hollow, or plate shape, and more preferably has a round bar or hollow shape.

Examples of the machining that can be performed on the solidification- and extrusion-molded article of polyglycolic acid include cutting, drilling, shearing, and a combination of these. Broadly speaking, the cutting method may include drilling, in addition to cutting. Examples of the cutting method include turning, grinding, lathing, boring, and the like performed by using a single cutter. Examples of the cutting method making use of a multi-cutter include milling, drilling, thread cutting, gear cutting, diesinking, filing, and the like. In the present invention, drilling making use of a drill or the like may be distinguished from the cutting in some cases. Examples of the shearing method include shearing by a cutting tool (saw), shearing by abrasive grains, shearing by heating and melting, and the like. Besides, ground finishing methods, plastic working methods such as punching making use of a knife-like tool and marking-off shearing, special working methods such as laser beam machining, and the like may also be applied.

For cases where the solidification- and extrusion-molded article of polyglycolic acid (i.e. stock shape for machining) has a plate, round bar, or hollow shape having a large thickness, as machining, the solidification- and extrusion-molded article is typically shorn into a proper size or thickness, the shorn solidification- and extrusion-molded article is ground to adjust its shape to a desired shape, and, as necessary, some parts of the solidification- and extrusion-molded article are further subjected to drilling. The solidification- and extrusion-molded article is finally subjected to a finishing operation as necessary. However, the order of the machining is not limited to this order. When a smooth surface is hard to form because of melting of the solidification- and extrusion-molded article due to frictional heat upon the machining, the machining is desirably performed while cooling a cut surface or the like. Excessive heat generated on the solidification- and extrusion-molded article by frictional heat can cause deformation and discoloration. Therefore, it is preferable to control the temperature of the solidification- and extrusion-molded article or surface to be machined to a temperature of 200°C or lower, and more preferably to a temperature of 150°C or lower.

### 3. Stock shape for machining

By subjecting the solidification- and extrusion-molded article of polyglycolic acid having a tensile strength at a temperature of 150°C of 20 to 200 MPa of the present invention to machining such as cutting, drilling, and shearing, the solidification- and extrusion-molded article can be made into a stock shape for machining, whereby various secondarily molded articles such as resin parts can be molded. Examples of the secondarily molded article include various components used in a downhole (downhole tools or components thereof) that are used for drilling and completion of hydrocarbon resources such as petroleum and gas. That is, the secondarily molded article is exemplified by a downhole tool for drilling and completion of petroleum recovery formed from a degradable material, or a downhole tool component for drilling and completion of petroleum recovery provided in the downhole tool. For example, the secondarily molded article is a downhole tool or component thereof for drilling and completion of petroleum recovery formed by machining, such as cutting, the solidification- and extrusion-molded article of polyglycolic acid having a tensile strength at a temperature of 150°C of 20 to 200 MPa of the present invention. An isolation plug provided with a downhole tool component for drilling and completion of petroleum recovery formed by machining the solidification- and extrusion-molded article of polyglycolic acid having a tensile strength at a temperature of 150°C of 20 to 200 MPa of the present invention is particularly preferable. Furthermore, another example of particularly preferable secondarily molded article is an isolation plug mandrel formed from the solidification- and extrusion-molded article of polyglycolic acid having a tensile strength at a temperature of 150°C of 20 to 200 MPa of the present invention. By further performing the step 6 in which the solidification- and extrusion-molded article of polyglycolic acid having a tensile strength at a temperature of 150°C of 20 to 200 MPa of the present invention is subjected to machining, a downhole tool or component thereof for drilling and completion of petroleum recovery can be manufactured. Specifically, for example, a round bar having a diameter of 20 to 200 mm, a hollow tube having an outer diameter of 50 to 200 mm and inner diameter of 5 to 100 mm, or the like for forming a downhole tool or component thereof for drilling and completion of petroleum recovery can be obtained. Furthermore, a hollow tube having a shape in which an inner diameter is uniform and an external diameter is enlarged at some part, such as an end, can be obtained as the hollow tube.

The solidification- and extrusion-molded article of polyglycolic acid of the present invention can be formed into other secondarily molded articles by subjecting the solidification- and extrusion-molded article to machining. In electric and electronic fields, examples thereof include wafer carriers, wafer cassettes, spin chucks, tote bottles, wafer boards, IC chip trays, IC chip carriers, IC conveying tubes, IC test sockets, burn-in sockets, pin grid array sockets, quad flat packages, leadless chip carriers, dual in-line packages, small outline packages, reel packings, various cases, storage trays, parts for conveying apparatus, magnetic card readers, and the like.

In a field of OA instruments, examples thereof include various roll components in image forming apparatus such as electrophotographic copying machines and electrostatic recording apparatus, transfer drums for recording apparatus, printed circuit board cassettes, bushings, paper and paper money conveying parts, paper feed rails, font cartridges, ink ribbon canisters, guide pins, trays, rollers, gears, sprockets, housings for computers, modem housings, monitor housings, CD-ROM housings, printer housings, connectors, computer slots, and the like.

In a field of communication apparatus, examples thereof include portable telephone parts, pagers, various kinds of sliding materials, and the like. In a field of automobiles, examples thereof include interior materials, underhoods, electronic and electric instrument housings, gas tank caps, fuel filters, fuel line connectors, fuel line clips, fuel tanks, instrument bezels, door handles, other various parts, and the like. In other fields, examples thereof include electric wire supporters, electromagnetic wave absorbers, flooring materials, pallet, shoe soles, brushes, blower fans, flat heaters, polyswitches, and the like.

### EXAMPLES

The present invention will be described in further detail hereinafter using working examples, a comparative example, and reference examples; however, the present invention is not limited by the examples. The measurement methods for the physical properties and characteristics are as follows.

### (1) Weight average molecular weight of polyglycolic acid

The weight average molecular weight of polyglycolic acid was measured by a method described below. In hexafluoroisopropanol (HFIP) in which sodium trifluoroacetate was dissolved at a concentration of 5 mM, 10 mg of sample was dissolved to make a 10 mL solution, and then the solution was filtered using a membrane filter to obtain a sample solution. By injecting 10 µL of the sample solution into a gel permeation chromatography (GPC) instrument, molecular weight of the sample solution was measured under the following conditions. Note that the sample solution was injected into the GPC instrument within 30 minutes after the sample was dissolved.

### <GPC measurement conditions>

Instrument: LC-9A, manufactured by Shimadzu Corporation
Column: two HFIP-806M (connected in series), manufactured by Showa Denko K.K.
Pre-column: one HFIP-LG
Column Temperature: 40°C
Eluent: HFIP solution in which sodium trifluoroacetate is dissolved at a concentration of 5 mM
Flow rate: 1 mL/min
Detector: differential refractometer
Molecular weight calibration: data of a molecular weight calibration curve produced by using five types of polymethylmethacrylates having standard molecular weights that are different from each other (manufactured by Polymer Laboratories Ltd.) is used

### (2) Melt viscosity of polyglycolic acid

Using a sample, prepared by crystallizing an amorphous sheet of polyglycolic acid having a thickness of approximately 0.2 mm by heating the amorphous sheet at approximately 150°C for 5 minutes, melt viscosity of the sample was measured by using a capilograph equipped with a nozzle having a diameter (D) of 0.5 mm and length (L) of 5 mm (Capilo 1A, manufactured by Toyo Seiki Seisaku-sho, Ltd.) at a temperature of 270°C under a shearing speed of 120 sec⁻¹.

### (3) Density

A sample cut out from the solidification- and extrusion-molded article of polyglycolic acid was measured in accordance with JIS R 7222, a pycnometer method using n-butanol (average value of three samples).

### (4) Tensile strength at a temperature of 150°C

The tensile strength at 150°C of the solidification- and extrusion-molded article of polyglycolic acid was measured in accordance with JIS K7113 using 2t Autograph AG-2000E manufactured by Shimadzu Corporation, while a sample piece was left in an oven at a temperature of 150°C (unit: MPa).

### (5) Practical use test

A hollow body produced by machining (cutting) the solidification- and extrusion-molded article of polyglycolic acid was introduced into an isolation plug as an isolation plug mandrel, and a tensile test was performed in a heating oven at a temperature of 150°C by applying 3,500 kgf (34,300 N) to determine presence or absence of break in the mandrel.

### [Working Example 1]

Pellets of polyglycolic acid having a weight average molecular weight of 230,000 and a melt viscosity of 920 Pa·s, measured at a temperature of 270°C under a shearing speed of 120 sec⁻¹, were left at a temperature of 140°C for 6 hours to dehumidify and dry. A fixed-quantity feeder was placed, and the dehumidified and dried pellets were supplied to a hopper of the fixed-quantity feeder to supply the pellets to a supplying part of a single screw extruder (L/D = 20; diameter: 30 mm) at a constant rate. The pellets were melt-kneaded at a cylinder temperature of 251°C, melt-extruded into a flow path of a forming die at an extrusion die outlet temperature of 276°C, and cooled and solidified at a cooling temperature of 90°C. Extrusion rate was approximately 19 mm/10 minutes.

By pressurizing the solidification- and extrusion-molded article that was solidified in the flow path of the forming die by passing the solidification- and extrusion-molded article in between upper rolls and lower rolls, expansion of the solidification- and extrusion-molded article of polyglycolic acid were suppressed by adjusting the external pressure (back pressure) of the forming die to be 3,100 kg. Thereafter, the solidification- and extrusion-molded article was heat-treated at a temperature of 215°C for 6 hours to remove residual stress. The heat treatment did not crack or deform the solidification- and extrusion-molded article.

By the method as described above, a round bar-shaped solidification- and extrusion-molded article of polyglycolic acid having a diameter of 90 mm and a length of 1,000 mm was obtained. When the tensile strength at 150°C was measured by cutting a test piece from the obtained round bar, the tensile strength was 38 MPa. Furthermore, using samples (three samples) that were cut out in the radial direction from positions located at 5 mm from each of the ends of the obtained round bar and from a position at the center of the obtained round bar in the length direction, densities of the outer surface part and the center part in the radial direction (radius: 10 mm) were measured. The density of the outer surface part was 1,581.1 kg/m³, and the density of the center part was 1,584.2 kg/m³.

Using the round bar described above, a hollow body in which two regions within 200 mm from each end had an outer diameter of 90 mm and inner diameter of 20 mm and the rest (600 mm) had an outer diameter of 80 mm and inner diameter of 20 mm was produced by hollowing and by machining (cutting) the outer diameter using a HSS tool bit. No cracking occurred during the processing. Cut surface thereof had no streak-like flow pattern caused by insufficient kneading, and the cut surface was uniform and beautiful.

When the produced hollow body was introduced into an isolation plug as an isolation plug mandrel and a tensile test was performed in a heating oven at a temperature of 150°C by applying 3,500 kgf (34,300 N), the mandrel was not broken. Furthermore, no problem was caused in the blocking operation.

### [Working Example 2]

A round bar-shaped solidification- and extrusion-molded article of polyglycolic acid having a diameter of 90 mm and a length of 1,000 mm was obtained in the same manner as in Working Example 1 except for using a raw material that is obtained by preparing pellets of a resin material via melt-kneading glass fibers (03JAFT592S, manufactured by Owens Corning; length: 3 mm) and a polyglycolic acid having a weight average molecular weight of 230,000 and a melt viscosity, measured at a temperature of 270°C under a shearing speed of 120 sec⁻¹, of 920 Pa·s mixed at a mass ratio of 70:30, and then leaving the pellets at a temperature of 120°C for 6 hours to dehumidify and dry the pellets. When the tensile strength at 150°C was measured by cutting a test piece from the obtained round bar, the tensile strength was 45 MPa.

Using the obtained round bar, a hollow body having the same shape as in Working Example 1 was produced by hollowing and by cutting the outer diameter using a HSS tool bit in the same manner as in Working Example 1. No cracking occurred during the processing. Cut surface thereof had no streak-like flow pattern caused by insufficient kneading, and the cut surface was uniform and beautiful. When the produced hollow body was introduced into an isolation plug as an isolation plug mandrel and a tensile test was performed in a heating oven at a temperature of 150°C by applying 3,500 kgf (34,300 N), the mandrel was not broken. Furthermore, no problem was caused in the blocking operation.

### [Comparative Example 1]

A round bar-shaped solidification- and extrusion-molded article of polyglycolic acid having a diameter of 90 mm and a length of 1,000 mm was obtained in the same manner as in Working Example 1 except for using, as a raw material, pellets of polyglycolic acid having a weight average molecular weight of 70,000 and a melt viscosity, measured at a temperature of 270°C under a shearing speed of 120 sec⁻¹, of 95 Pa·s. However, in a step of heat-treating at a temperature of 215°C for 6 hours, deformation such as necking was observed in some part of the article. When the tensile strength at 150°C was measured by cutting a test piece from the obtained round bar, the tensile strength was 10 MPa.

Using the obtained round bar, a hollow body having the same shape as in Working Example 1 was produced by hollowing and by cutting the outer diameter using a HSS tool bit in the same manner as in Working Example 1. Although no cracking occurred during the processing, streak-like flow patterns caused by insufficient kneading were observed on the cut surface. When the produced hollow body was introduced into an isolation plug as an isolation plug mandrel and a tensile test was performed in a heating oven at a temperature of 150°C by applying 3,500 kgf (34,300 N), the mandrel was broken, and the blocking mechanism was not operated.

From Working Examples 1 and 2, it was found that a solidification- and extrusion-molded article of polyglycolic acid that had a tensile strength at a temperature of 150°C of 20 to 200 MPa and that was formed from a resin material containing polyglycolic acid, the polyglycolic acid having a weight average molecular weight of 100,000 to 300,000 and a melt viscosity of 100 to 2,000 Pa·s when measured at a temperature of 270°C under a shearing speed of 120 sec⁻¹, had excellent machinability and was possible to be formed into a secondarily molded product, particularly a downhole tool component for drilling and completion of petroleum recovery, via machining, such as cutting, drilling, and shearing. On the other hand, it was found that the solidification- and extrusion-molded article of polyglycolic acid of Comparative Example 1 that was formed from a resin material containing polyglycolic acid, the polyglycolic acid having a weight average molecular weight of 70,000 and a melt viscosity of 95 Pa·s when measured at a temperature of 270°C under a shearing speed of 120 sec⁻¹, and that had a tensile strength at a temperature of 150°C of 10 MPa was deformed by the heat treatment that was performed in order to reduce stress, and failed to provide a beautifully processed surface by machining such as cutting or shearing. In particular, it was found that the solidification- and extrusion-molded article of polyglycolic acid of Comparative Example 1 had insufficient strength in a high temperature environment that is required for use as a downhole tool or component thereof for drilling and completion of petroleum recovery.

### Industrial applicability

Since the solidification- and extrusion-molded article of polyglycolic acid of the present invention is a solidification- and extrusion-molded article of polyglycolic acid having a tensile strength at a temperature of 150°C of 20 to 200 MPa; the solidification- and extrusion-molded article being formed from a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s, a secondarily molded product having a desired shape, particularly a solidification- and extrusion-molded article of degradable resin that has sufficient strength in a high temperature environment and that can be formed into a downhole tool component or the like provided in an isolation plug, an isolation plug comprising the downhole tool component, and an isolation plug mandrel can be provided by subjecting the solidification- and extrusion-molded article of polyglycolic acid to machining such as cutting, drilling, and shearing. Thus, the solidification- and extrusion-molded article of polyglycolic acid of the present invention has high industrial applicability. Furthermore, according to the manufacturing method of the present invention, it is possible to provide a secondarily molded product, particularly a solidification- and extrusion-molded article of degradable resin having sufficient strength in a high temperature environment and properties suitable for machining to form a downhole tool or component thereof for drilling and completion of petroleum recovery, that has reduced residual stress and excellent hardness, strength, and flexibility. Therefore, the solidification- and extrusion-molded article of polyglycolic acid of the present invention has high industrial applicability.

## Claims

1. A solidification- and extrusion-molded article of polyglycolic acid having a tensile strength at a temperature of 150°C of 20 to 200 MPa; the solidification- and extrusion-molded article being formed from a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s.

2. The solidification- and extrusion-molded article of polyglycolic acid according to claim 1, wherein the solidification- and extrusion-molded article has a round bar, hollow, or plate shape.

3. The solidification- and extrusion-molded article of polyglycolic acid according to claim 1 or 2, wherein the resin material is a polyglycolic acid composition containing from 0.001 to 5 mass% of colorant in terms of a total mass.

4. The solidification- and extrusion-molded article of polyglycolic acid according to any one of claims 1 to 3, wherein the resin material is a polyglycolic acid composition containing from 5 to 70 mass% of filler in terms of the total mass.

5. The solidification- and extrusion-molded article of polyglycolic acid according to any one of claims 1 to 4, wherein the solidification- and extrusion-molded article is a stock shape for machining.

6. A downhole tool or component thereof for drilling and completion of petroleum recovery formed by machining the solidification- and extrusion-molded article of polyglycolic acid described in claim 5.

7. An isolation plug comprising the downhole tool component for drilling and completion of petroleum recovery formed from the solidification- and extrusion-molded article of polyglycolic acid described in claim 6.

8. The downhole tool component for drilling and completion of petroleum recovery according to claim 6, wherein the downhole tool component is an isolation plug mandrel.

9. A method for manufacturing a solidification- and extrusion-molded article of polyglycolic acid, the method comprising steps 1 to 4 below:
a) step 1 of supplying a resin material containing polyglycolic acid, the polyglycolic acid having a weight average molecular weight of 100,000 to 300,000 and a melt viscosity, measured at a temperature of 270°C under a shearing speed of 120 sec⁻¹, of 100 to 2,000 Pa·s, into an extruder, and melt-kneading the resin material at a cylinder temperature of the extruder of 220 to 285°C;
b) step 2 of extruding the resin material, melted by melt-kneading, from an extrusion die at a tip of the extruder into a flow path of a forming die comprising cooling means and the flow path that communicates with a path of melted resin of the extrusion die and that has a cross-sectional shape of an extrusion molded article;
c) step 3 of solidifying the melted and extruded matter formed from the resin material by cooling in the flow path of the forming die, and then extruding the solidified and extruded matter from the tip of the forming die to outside; and
d) step 4 of pressurizing the solidified and extruded matter, and drawing the same while applying back pressure thereto in a direction of the forming die to suppress expansion of the solidified and extruded matter in a thickness direction or radial direction to obtain a solidification- and extrusion-molded article of polyglycolic acid.

10. The manufacturing method according to claim 9, wherein, in the step 1, the resin material containing polyglycolic acid is supplied to the extruder using a fixed-quantity feeder.

11. The manufacturing method according to claim 9 or 10, wherein, in the step 3, a forming die having heating means in addition to the cooling means is used; and the step 3 comprises: first, heating the melted and extruded matter in the flow path around an extrusion die outlet to a temperature of 230 to 290°C by the heating means, and then cooling the melted and extruded matter in the flow path to a temperature lower than a crystallization temperature of the polyglycolic acid to solidify the melted and extruded matter by the cooling means.

12. The manufacturing method according to any one of claims 9 to 11, further comprising step 5, in which the solidification- and extrusion-molded article of polyglycolic acid obtained in the step 4 is heat-treated at a temperature of 150 to 230°C for 3 to 24 hours.

13. The manufacturing method of any one of claims 9 to 12, wherein the resin material is a polyglycolic acid composition containing from 0.001 to 5 mass% of colorant in terms of a total mass.

14. The manufacturing method of any one of claims 9 to 13, wherein the resin material is a polyglycolic acid composition containing from 5 to 70 mass% of filler in terms of the total mass.

15. The manufacturing method according to any one of claims 9 to 14, wherein a solidification- and extrusion-molded article of polyglycolic acid in a round bar, hollow, or plate shape having a tensile strength at a temperature of 150°C of 20 to 200 MPa is obtained.

16. A method for manufacturing a downhole tool or component thereof for drilling and completion of petroleum recovery, the method further comprising step 6 of machining the solidification- and extrusion-molded article of polyglycolic acid, the solidification- and extrusion-molded article being manufactured by the manufacturing method described in any one of claims 9 to 15 and having a tensile strength at a temperature of 150°C of 20 to 200 MPa.
